Europäisches Patentamt

European Patent Office

Office européen des brevets

(11) Veröffentlichungsnummer: **0 308 861 B1**

# EUROPÄISCHE PATENTSCHRIFT

(45) Veröffentlichungstag der Patentschrift: **05.08.92**

(51) Int. Cl.⁵: **B65B 51/30**

(21) Anmeldenummer: **88115380.3**

(22) Anmeldetag: **20.09.88**

(54) **Siegelvorrichtung.**

(30) Priorität: **23.09.87 DE 3732033**

(43) Veröffentlichungstag der Anmeldung:
**29.03.89 Patentblatt 89/13**

(45) Bekanntmachung des Hinweises auf die
Patenterteilung:
**05.08.92 Patentblatt 92/32**

(84) Benannte Vertragsstaaten:
**DE ES GB IT**

(56) Entgegenhaltungen:
**EP-A- 0 182 505**
**US-A- 3 850 780**

(73) Patentinhaber: **ROVEMA VERPACKUNGSMA-
SCHINEN GMBH
Postfach 20
W-6301 Fernwald 2(DE)**

(72) Erfinder: **Schneider, Werner
Grüner Weg 1a
W 6331 Hohenahr(DE)**
Erfinder: **Baur, Walter, Dr.
Herzbergstr. 37-39
W 6466 Gründau(DE)**

(74) Vertreter: **Missling, Arne, Dipl.-Ing.
Patentanwalt Bismarckstrasse 43
W-6300 Giessen(DE)**

Rank Xerox (UK) Business Services

## Beschreibung

Die vorliegende Erfindung betrifft eine Vorrichtung zum Querschweißen und/oder Querschneiden von siegelfähigem Bahnmaterial gemäß dem Oberbegriff von Anspruch 1.

Vorrichtungen der genannten Art sind in der DE-PS 22 24 407 und der US-PS 3 850 780 beschrieben. Sie haben eine vorteilhafte Mechanik, um in geschlossenen Kurvenführungen zwei Siegelbacken so zu bewegen, daß sie zwecks sicherer Siegelung auch schwieriger zu verarbeitenden Bahnmaterials es auf einer möglichst langen geradlinigen Wegstrecke zwischen sich klemmen, ohne daß die Durchlaufgeschwindigkeit abgesenkt werden müßte. Aus der EP-A-0 182 505 ist eine kombinierte Siegel- und Strippeinrichtung bekannt, wobei die Strippeinrichtung und die Siegelbacken an dem gleichen Befestigungsteil angeordnet sind, daß von einer Antriebseinheit in einer Ebene hin und her bewegt wird.

Es ergeben sich jedoch Probleme beim Verpacken von insbesondere sperrigem Füllgut, das bei der Beschickung trotz gleichmäßiger Mengen bzw. Gewichtsdosierung nicht selten beträchtliche Volumenunterschiede aufweisen kann. Beispielsweise haben Kartoffelchips durchaus keine einheitliche Größe, schon weil auch bei guter Klassierung starke Kartoffel-Größenschwankungen auftreten können. Aus frisch geernteten Kartoffeln hergestellte Chips können daher unter Umständen überdurchschnittlich groß ausfallen, also sperrig sein; nach einer längeren Lagerung sind infolge von eingetretenem Feuchteschwund die Abmessungen allgemein geringer. Andererseits ist die Packungsgröße vielfach fest vorgegeben, z. B. durch starre Abzugsmaße des Hüllstoffes, durch bestimmte Aufdruckmuster und dergleichen, so daß bei automatischen Verpackungsanlagen Schwierigkeiten im Betriebsablauf bisher unvermeidlich waren.

Aufgrund dieser Bedarfslage ist es Aufgabe der Erfindung, eine Vorrichtung der eingangs genannten Art so zu verbessern, daß das automatische Abpacken von insbesondere sperrigem Füllgut auch bei unterschiedlichen Einzelvolumina störungsfrei vor sich gehen kann und daß gleichmäßige Packungsgrößen mit wirtschaftlichen Mitteln zuverlässig gewährleistet sind.

Die US-PS 3 850 780 entspricht dem Oberbegriff des Anspruchs 1.

Ein Hauptmerkmal der Erfindung ist im kennzeichnenden Teil von Anspruch 1 angegeben. Ausgestaltungen sind Gegenstand der Unteransprüche 2 bis 15.

Nach der Erfindung sind den Siegelbacken jeweils zwangsgeführte Quetschkörper vorgeordnet. Man erreicht dadurch auf überraschend einfache Weise, daß das Volumen von sperrigem Füllgut jeweils vergleichmäßigt wird, noch bevor der Siegelvorgang beginnt. Hierbei wird zumindest im Bereich der späteren Siegelfläche das Füllgut zerbrochen und an diesem Bereich in den Beutel geschoben. Die Quetschkörper haben dabei eine Relativgeschwindigkeit zur Packung. In der entstehenden Packung wird eine gewisse Verdichtung des Füllvolumens bewirkt, indem die Quetschkörper noch vor den Siegelbacken aufeinander zu laufen und die sperrigen Produktteile in die werdende Packung hinein schieben. Die Quetschkörper fungieren mithin als Streifwerkzeuge, weshalb sie auch als Rollquetscher, Streifschieber, Preßwalzen oder dergleichen bezeichnet werden können. Die erfindungsgemäße Vorrichtung eignet sich insbesondere auch für Füllgut, bei dem ein zerkrümelter Anteil grundsätzlich tolerierbar ist. Sperrig ausladende Produktteile können dabei von den Quetschkörpern bzw. Streifelementen zerkleinert werden und tiefer in die Packung gelangen, so daß der Inhalt etwa verdichtet wird und die anschließende Quersiegelung problemlos an der vorgegebenen Stelle erfolgen kann.

Nach Anspruch 2 befinden sich die Quetschkörper an den einen Enden von Hebeln, die auf den Siegelbacken-Trägern schwenkbar gelagert sind. Man kann sich also des bekannten Aufbaues intermittierend arbeitender Schlauchbeutelmaschinen der eingangs genannten Art bedienen, wobei die Siegelbacken-Träger zyklisch kombinierte Schwenk- und Hubbewegungen ausführen. Auch lassen sich solche Vorrichtungen auf einfache Weise mit den erfindungsgemäßen Quetschkörpern ausrüsten, die mit ihren Hebeln sozusagen auf den Siegelbacken-Trägern reiten. Vorzugsweise ist die Länge der Quetschkörper laut Anspruch 3 im wesentlich gleich jener der Siegelbacken. Fertigungstechnisch sehr vorteilhaft ist es, wenn die Quetschkörper zylindrisch ausgebildet sind, beispielsweise als Rundstäbe, Walzen, Käfigleisten oder dergleichen, so daß Herstellung und Montage auf besonders einfache Weise vor sich gehen.

Eine zweckmäßige Ausgestaltung der Erfindung besteht gemäß Anspruch 5 darin, daß die Quetschkörper gegenüber den Siegelbacken federbelastet und unter der Federkraft relativbeweglich sind. Dazu können nach Anspruch 6 Zugfedern vorgesehen sein, die jeweils zwischen Auslegern der Siegelbacken und den anderen Enden der Hebel angeordnet sind. Letztere können nach Anspruch 7 so bemessen sein, daß sie beiderseits der Siegelbacken an deren Stirnrand vorbeischwenkbar sind. Wichtig ist die Weiterbildung von Anspruch 8, wonach die Quetschkörper den Siegelbacken so voreilen, daß das Verhältnis von Quetschkörperstrecke (im Bereich der Bahnmaterialklemmung) zu der wirksamen Siegelbackenbreite jedenfalls größer als 1 ist, vorzugsweise größer als 3.

Eine konstruktiv besonders vorteilhafte Gestaltung ist laut Anspruch 9 gegeben, wenn den Quetschkörpern beiderseits Rollen zugeordnet sind, die jeweils auf oder in einer quer zur Symmetrieebene verlaufenden Bahn eines Führungskörpers abrollen. Einzelheiten dieser Gestaltung sind in den Ansprüchen 10 bis 14 angegeben. Diese befassen sich auch mit der speziellen Geometrie, die erfindungsgemäß als besonders günstig für die Zwangsführung der Quetschkörper bzw. Streifelemente festzustellen ist. Die konstruktive Durchbildung der die Quetschkörper tragenden Hebel ist Gegenstand der Unteransprüche 15 und 16.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Darin zeigen:

Fig. 1    eine schematisierte Seitenansicht einer erfindungsgemäßen Vorrichtung,

Fig. 2    eine Draufsicht auf eine solche Vorrichtung, teilweise im Schnitt entsprechend der Linie II-II in Fig. 5a und Fig. 6,

Fig. 3    eine Seitenansicht einer Baugruppe,

Fig. 4    eine Schrägansicht eines schwenkbaren Hebels mit Gleitrolle und Quetschkörper,

Fig. 5a    bis 5d schematisierte Seitenansichten der Vorrichtung entsprechend Fig. 1 in verschiedenen Bewegungsphasen und

Fig. 6    eine vergrößerte Seitenansicht entsprechend fig. 5c.

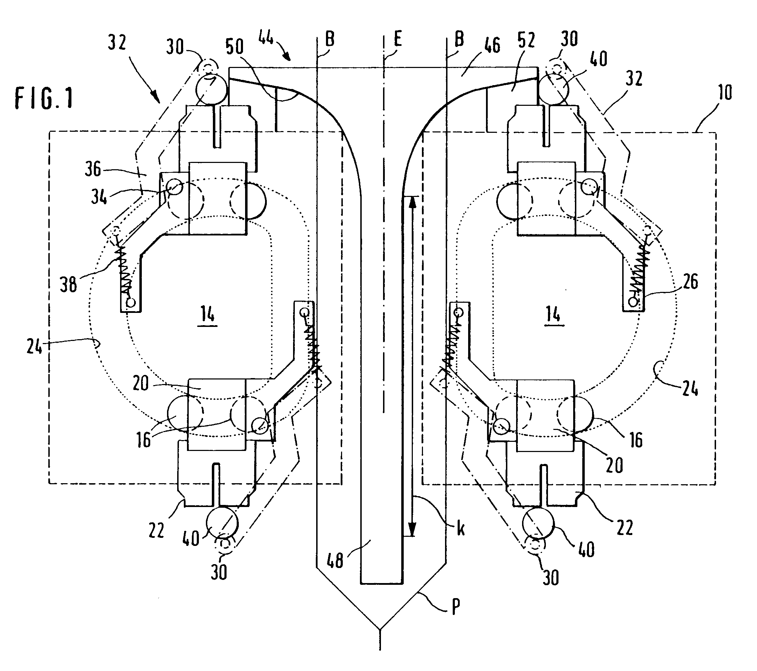

Der allgemeine Aufbau einer erfindungsgemäßen Vorrichtung geht aus den Fig. 1, 2 und 6 am deutlichsten hervor. An einem Rahmen 10 sind Platten 12 angebracht, um Kurvenblöcke 14 zu haltern. In diesen sind Rollen 16 geführt, und ist eine Antriebswelle 18 gelagert, welche für die Umlaufbewegung des Trägers 20 von Siegelbacken 22 sorgt. Die Anordnung kann allgemein derjenigen nach DE-PS 22 24 407 entsprechen, wobei die Siegelbacken 22 auf ihren Trägern 20 beiderseits einer Symmetrieebene E angeordnet und in den geschlossenen Kurvenführungen 14 bzw. 24/16 spiegelbildlich zwangsgeführt sind. Mit (nicht näher dargestellten) herkömmlichen Mitteln wird der Vorrichtung siegelfähiges, insbesondere schlauchförmiges Bahnmaterial B zugeführt, das in regelmäßigen Abständen Füllgut enthält.

Um das automatische Abpacken des Füllguts auch bei ungleichmäßigem Volumen zu gewährleisten, sind den Siegelbacken 22 erfindungsgemäß Quetschkörper bzw. Streifwerkzeuge 30 vorgeordnet, die an ihren beiden Enden von Hebeln 32 gehaltert sind, welche mit Schwenklagern 34 auf dem Träger 20 der Siegelbacken 22 huckepack angeordnet sind. Die Hebel 32 haben im mittleren Bereich eine Abkröpfung 36 und tragen an ihren einen Enden halterungen 42 für Gleitrollen 40, die zur Volumen-Vergleichmäßigung der entstehenden packungen P entlang einer Quetschkörperstrecke k (Fig. 1) an einem Führungskörper 44 entlanglaufen. Dazu sind die anderen Enden der Hebel 32 über Zugfedern 38 mit Auslegern 26 der Siegelbackenträger 20 verbunden. Die Federn 38 belasten also die Hebel 32 jeweils zu der Bahn des Führungskörpers 44 hin, die allgemein hyperbelähnlich verläuft und vom Kopfbalken 46 des T-förmigen Führungskörpers 44 ausgehend über eine Einlaufkurve 50 in den Stamm 48 parallel zur Symmetrieebene E übergeht.

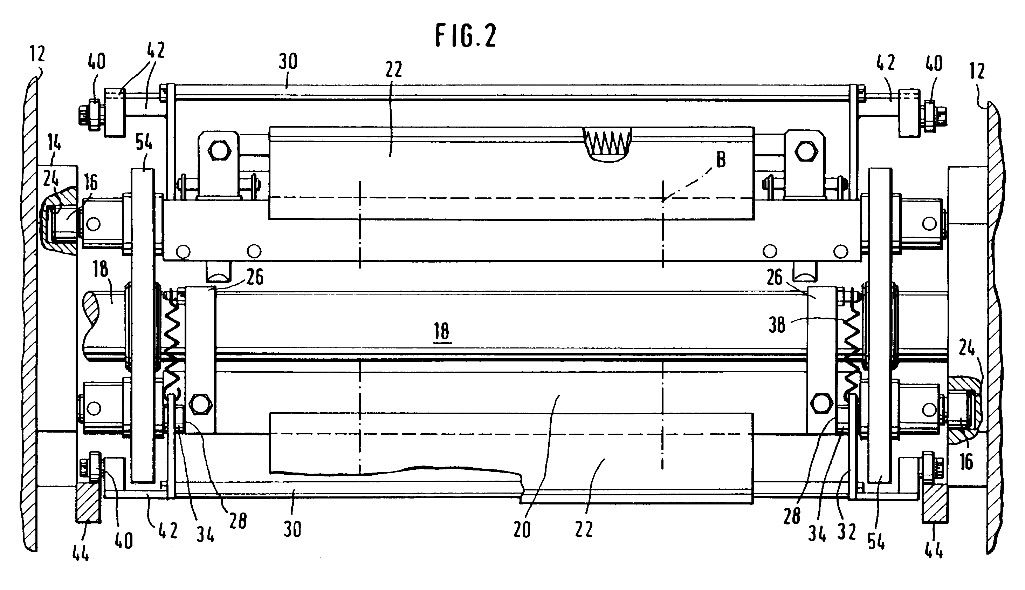

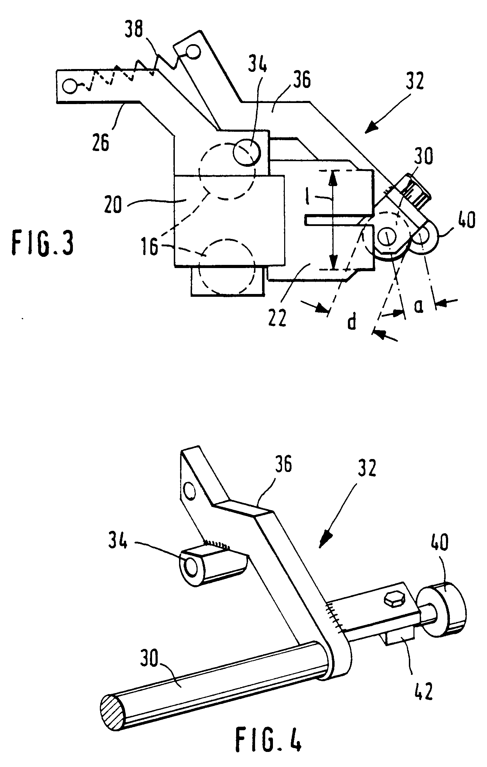

Man erkennt insbesondere in Fig. 2, daß die Hebel 32 mit den Quetschkörpern bzw. Streifwerkzeugen 30 beiderseits am Stirnrand 28 der Siegelbacken 20 vorbeigehen. Im unteren Teil von Fig. 2 ist (teilweise weggebrochen) eine Siegelbacke 22 in der Vorlaufstellung gezeichnet, entsprechend der oberen Hälfte von Fig. 1. Hingegen stellt die andere Hälfte von Fig. 2 den Rücklauf einer solchen Baugruppe dar, wie sie in Fig. 1 unten und in Fig. 3 gesondert abgebildet ist. Man ersieht hieraus, daß der Achsabstand a zwischen dem zylindrischen Quetschkörper 30 und den zugeordneten Gleitrollen 40 kleiner ist als deren Durchmesser d. Da an den Siegelbacken 22 eine Heizleistung aufgebracht werden muß, die zum sicheren Verschweißen und zum Abtrennen der Packungen P ausreicht, ist eine gewisse Siegelbackenbreite I wärmetechnisch vorgegeben. In Verbindung mit Fig. 1 ergibt sich, daß das Verhältnis der wirksamen Quetschkörperstrecke k zu der Siegelbackenbreite I erfindungsgemäß deutlich größer als 1 ist und durchaus 5:1 erreichen oder überschreiten kann.

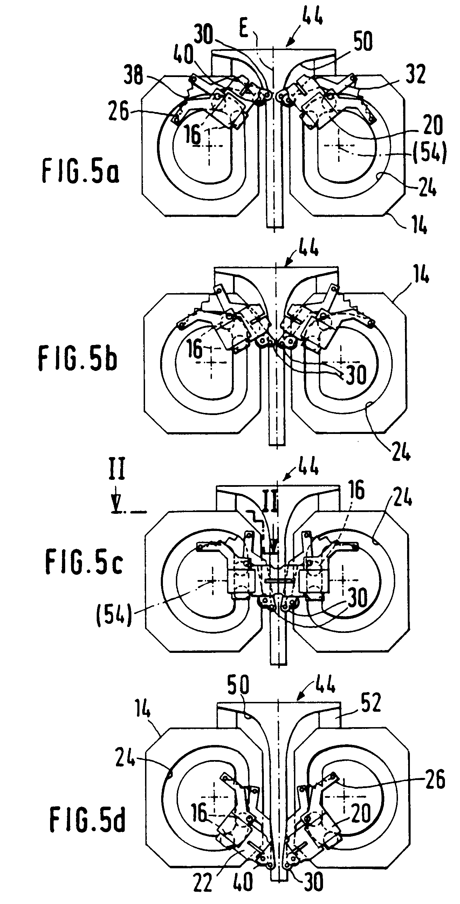

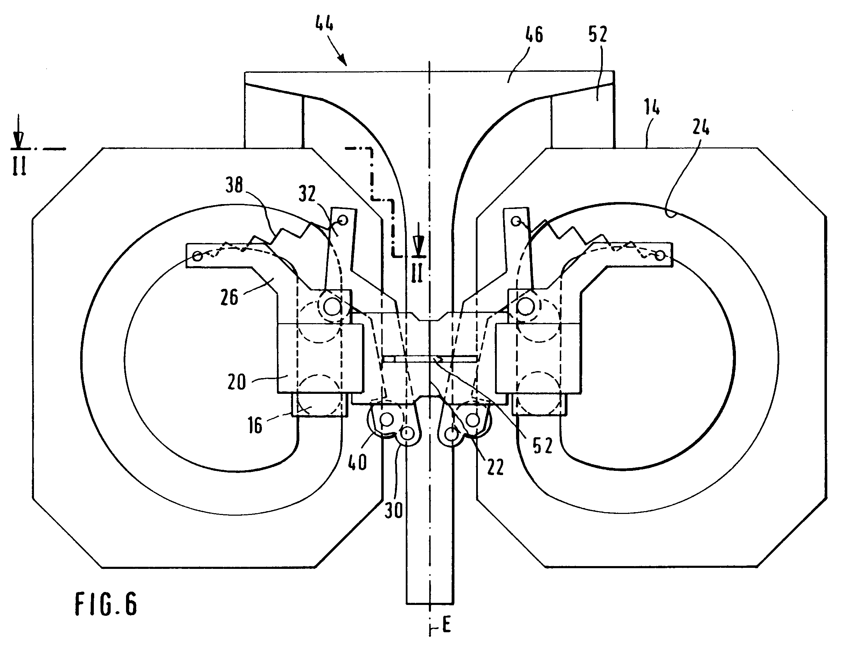

Der Ablauf ist aus den Fig. 5a bis 5d gut zu erkennen. Während die Führungsrollen 16 der Siegelbackenträger beiderseits der Symmetrieebene E zu Beginn (Fig. 5a) im oberen Ecke der D-förmigen Steuerkurve 24 stehen, sind die Quetschkörper 30 bereits am Beginn der Quetschkörperstrecke k, weil die Gleitrollen 40 die Einlaufkurven 50 des Führungskörpers 44 bereits hinter sich haben. Die Quetschkörper laufen dann schneller als das (hier nicht dargestellte) Bahnmaterial (Fig. 5b), während die Siegelbacken 22 erst noch an das Bahnmaterial herangeschwenkt werden. Im Stadium der Fig. 5c liegen die Siegelflächen der Backen 22 einander gegenüber an dem Bahnmaterial an, so daß die Verschweißung stattfindet. Zugleich kann ein Trennelement bzw. -Messer 52 (Fig. 6) die (hier nicht dargestellte) entstandene Packung P von dem Bahnmaterial B (Fig. 1) abtrennen. Die Quetschkörper bzw. Streifwerkzeuge 30 sind in dieser Position bereits ein wenig von der Symmetrieebene E entfernt, doch können sie noch am oberen Rand der entstandenen Packung P angreifen. Sie tragen auch zum Abstreifen bei (Fig. 5d) wenn die Siegelbacken 22 ausschwenken, sobald die Rollen 16 am unteren Eck der D-förmigen Steuernuten 24 angekommen sind.

Wenngleich in Fig. 5a bis 5d und Fig. 6 der Übersichtlichkeit halber jeweils nur eine Baugruppe (Fig. 3 und 4) pro Kurvenführung 14 dargestellt ist, geht aus Fig. 1 hervor, daß die Doppelanordnung je zweier umlaufender Baugruppen in der erfindungsgemäßen Vorrichtung ohne weiteres Platz findet. Daher lassen sich auch kurze Packungen mit besonders großer Ausstoßleistung zuverlässig erzeugen.

Sämtliche aus den Ansprüchen, der Beschreibung und der Zeichnung hervorgehenden Merkmale und Vorteile der Erfindung, einschließlich konstruktiver Einzelheiten, räumlicher Anordnungen und Verfahrensschritten, können sowohl für sich als auch in den verschiedensten Kombinationen erfindungswesentlich sein.

**Patentansprüche**

1. Vorrichtung zum Querschweißen und/oder Querschneiden von siegelfähigem Bahnmaterial (B), das in regelmäßigen Abständen insbesondere sperriges Füllgut enthält, mit wenigstens zwei einander gegenüberliegend angeordneten, schwenkbar gehalterten Siegelbacken (22), die jeweils in geschlossenen Kurvenführungen (14, 16) spiegelbildlich zu einer Symmetrieebene (E) derart zwangsgeführt sind, daß sie im füllgutfreien Bereich jeweils das Bahnmaterial (B) auf einer entlang der Symmetrieebene (E) verlaufenden Wegstrecke zwischen sich klemmen, dann ausschwenken und rücklaufend an den nächsten füllgutfreien Bereich gelangen, dadurch gekennzeichnet, daß den Siegelbacken (22) jeweils derart zwangsgeführte Quetschkörper (30) vorgeordnet sind, daß die Quetschkörper (30) zumindest den späteren durch die Siegelbackenbreite (l) vorgegebenen Siegelbereich überstreichen, daß die Quetschkörper (30) von einem Führungskörper (44) geführt sind und daß der Fuhrungskörper (44) allgemein T-förmig gestaltet ist, wobei der Kopfbalken (46) beiderseits der Symmetrieebene (E) Einlaufkurven (50) aufweist, die in den Stamm (48) übergehen.

2. Vorrichtung nach Anspruch 1, dadurch gekennzeichnet, daß die Quetschkörper (30) an den einen Enden von auf den Siegelbacken-Trägern (20) schwenkbar gelagerten Hebeln (32) angeordnet sind.

3. Vorrichtung nach Anspruch 1 oder 2, dadurch gekennzeichnet, daß die Länge der Quetschkörper (30) im wesentlichen gleich jener der Siegelbacken (22) ist.

4. Vorrichtung nach einem der Ansprüche 1 bis 3, dadurch gekennzeichnet, daß die Quetschkörper (30) zylindrisch ausgebildet sind, beispielsweise als Rundstäbe, Walzen, Käfigleisten oder dergleichen.

5. Vorrichtung nach einem der Ansprüche 1 bis 4, dadurch gekennzeichnet, daß die Quetschkörper (30) gegenüber den Siegelbacken (22) federbelastet und unter der Federkraft relativbeweglich sind.

6. Vorrichtung nach einem der Ansprüche 2 bis 5, dadurch gekennzeichnet, daß zwischen den anderen Enden der Hebel (32) und Auslegern (26) der Siegelbacken (22) jeweils eine Zugfeder (38) angeordnet ist.

7. Vorrichtung nach einem der Ansprüche 2 bis 6, dadurch gekennzeichnet, daß die Hebel (32) beiderseits der Siegelbacken (22) an deren Stirnrand (28) vorbeischwenkbar sind.

8. Vorrichtung nach wenigstens einem der Ansprüche 1 bis 7, dadurch gekennzeichnet, daß die Quetschkörper (30) den Siegelbacken (22) voreilen, so daß das aus dem Quotienten der Quetschkörperstrecke (k) im Bereich der Bahnmaterialklemmung mit der Siegelbackenbreite (l) gegebene Verhältnis (k:l) größer als 1 ist, vorzugsweise größer als 3.

9. Vorrichtung nach wenigstens einem der Ansprüche 1 bis 8, dadurch gekennzeichnet, daß den Quetschkörpern (30) beiderseits Rollen (40) zugeordnet sind, die jeweils auf oder in einer quer zur Symmetrieebene (E) verlaufenden Bahn des Führungskörpers (44) abrollen.

10. Vorrichtung nach Anspruch 9, dadurch gekennzeichnet, daß die Drehachse der Rolle (40) jener der Quetschkörper (30) nah benachbart ist.

11. Vorrichtung nach Anspruch 10, dadurch gekennzeichnet, daß der Achsabstand (a) kleiner als der Rollendurchmesser (d) ist.

12. Vorrichtung nach einem der Ansprüche 9 bis 11, dadurch gekennzeichnet, daß die Einlaufkurven (50) hyperbelähnlich verlaufen, so daß zwischen etwa geradlinigen Endabschnitten ein Bereich veränderlicher Krümmung liegt.

**13.** Vorrichtung nach einem der Ansprüche 9 bis 12, dadurch gekennzeichnet, daß das Abheben der Rolle (40) von dem Führungskörper (44) durch den Federweg der Belastungsfedern (38) und/oder durch Gestalt und Anbringung der Hebel (32) festlegbar ist.

**14.** Vorrichtung nach Anspruch 13, dadurch gekennzeichnet, daß das Schwenklager (34) jedes Hebels (32) an oder nahe einer Abkröpfung (36) angeordnet ist.

**15.** Vorrichtung nach Anspruch 14, dadurch gekennzeichnet, daß die Abkröpfung (36) in einem mittleren Bereich des Hebels (32) angeordnet und so gestaltet ist, daß die Hebelenden zueinander in einem stumpfen Winkel stehen.

**Claims**

**1.** Apparatus for transverse welding and/or transverse cutting of sealable web material (B) containing in particular bulky filling material at regular intervals, having at least two pivotally held sealing jaws (22) which are arranged opposite one another and which are each positively guided in closed cam guides (14, 16) mirror-symmetrically with respect to a plane (E) of symmetry such that they clamp between them in the region free of filling material in each case the web material (B) on a section running along the plane (E) of symmetry, then pivot out and return to the next region free of filling material, characterized in that positively guided compression bodies (30) are in each case arranged upstream of the sealing jaws (22) such that the compression bodies (30) brush over at least the later sealing region predetermined by the width (l) of the sealing jaws, in that the compression bodies (30) are guided by a guide body (44), and in that the guide body (44) is of generally T-shaped construction, the head bar (46) having on either side of the plane (E) of symmetry converging curves (50) which merge into the trunk (48).

**2.** Apparatus according to Claim 1, characterized in that the compression bodies (30) are arranged at one end of levers (32) which are pivotally mounted on the sealing jaw carriers (20).

**3.** Apparatus according to Claim 1 or 2, characterized in that the length of the compression bodies (30) is substantially equal to that of the sealing jaws (22).

**4.** Apparatus according to one of Claims 1 to 3, characterized in that the compression bodies (30) are of cylindrical construction, for example in the form of round rods, rollers, cage bars or the like.

**5.** Apparatus according to one of Claims 1 to 4, characterized in that the compression bodies (30) are spring-loaded with respect to the sealing jaws (22) and are relatively movable by spring force.

**6.** Apparatus according to one of Claims 2 to 5, characterized in that a respective tension spring (38) is arranged between the other ends of the levers (32) and cantilevers (26) of the sealing jaws (22).

**7.** Apparatus according to one of Claims 2 to 6, characterized in that the levers (32) may be pivoted past either side of the sealing jaws (22) at the end-side edge (28) thereof.

**8.** Apparatus according to at least one of Claims 1 to 7, characterized in that the compression bodies (30) precede the sealing jaws (22) so that the ratio (k:l) resulting from the quotient of the compression body section (k), in the region of the web material clamping, and the width (l) of the sealing jaws, is greater than 1, preferably greater than 3.

**9.** Apparatus according to at least one of Claims 1 to 8, characterized in that there are associated with the compression bodies (30) on either side rollers (40) which in each case roll on or in a path of the guide body (44) running transversely with respect to the plane (E) of symmetry.

**10.** Apparatus according to Claim 9, characterized in that the axis of rotation of the roller (40) is closely adjacent to that of the compression bodies (30).

**11.** Apparatus according to Claim 10, characterized in that the axial spacing (a) is smaller than the diameter (d) of the roller.

**12.** Apparatus according to one of Claims 9 to 11, characterized in that the converging curves (50) run in hyperbolic manner, so that there is a region of variable curvature between approximately rectilinear end sections.

**13.** Apparatus according to one of Claims 9 to 12, characterized in that the raising of the roller (40) from the guide body (44) may be established by the spring travel of the load springs (38) and/or by the construction and mounting of the levers (32).

14. Apparatus according to Claim 13, characterized in that the pivotal bearing (34) of each lever (32) is arranged at or in the vicinity of an angular part (36).

15. Apparatus according to Claim 14, characterized in that the angular part (36) is arranged in a central region of the lever (32) and is constructed such that the lever ends are at an obtuse angle with respect to one another.

**Revendications**

1. Dispositif pour souder et/ou couper transversalement un matériau en bande (B) destiné à être scellé, qui contient, à des distances régulières, un produit de remplissage, en particulier encombrant,

ce dispositif comportant au moins deux traverses de scellement (22) disposées en face l'une de l'autre et maintenues avec possibilité de pivoter, qui sont forcées à suivre chacune un guidage courbe (14, 16) fermé, d'une façon symétrique par rapport à un plan de symétrie (E), de telle façon qu'elles pincent entre elles, chaque fois dans la zone dépourvue de produit de remplissage, le matériau en bande (B), en suivant un trajet situé le long du plan de symétrie (E), puis ensuite pivotent vers l'extérieur et reviennent en arrière jusqu'à la zone dépourvue de produit de remplissage suivante

caractérisé en ce qu'en avant de chaque traverses de scellement (22) sont disposés des corps de pressage (30) guidés de telle façon qu'ils balayent au moins la zone où se fera le scellement qui est déterminée par la largeur (l) des traverses de scellement,

en ce que les corps de pressage (30) sont guidés par un corps de guidage (44)

et en ce que ce corps de guidage (44) a une forme générale en T, dont la barre de tête (46) présente, de part et d'autre du plan de symétrie (E), des courbes d'entrée (50) qui se raccordent à l'âme (48).

2. Dispositif suivant la revendication 1, caractérisé en ce que les corps de pressage (30) sont disposés à l'une des extrémités de leviers (32) montés pivotant sur les supports (20) des traverses de scellement.

3. Dispositif suivant la revendication 1 ou la revendication 2, caractérisé en ce que la longueur des corps de pressage (30) est essentiellement égale à celle des traverses de scellement (22).

4. Dispositif suivant l'une quelconque des revendications 1 à 3, caractérisé en ce que les corps de pressage (30) sont réalisés cylindriques, par exemple sous la forme de barres rondes, de cylindres, de barreaux de cage ou similaires.

5. Dispositif suivant l'une quelconque des revendications 1 à 4, caractérisé en ce que les corps de pressage (30) sont soumis à une force élastique d'appui contre les traverses de scellement (22) et peuvent se déplacer d'un mouvement relatif sous l'effet de cette force.

6. Dispositif suivant l'une quelconque des revendications 2 à 5, caractérisé en ce qu'entre chacune des autres extrémités des leviers (32) et des bras (26) des traverses de scellement (22), est disposé un ressort de traction ( 38).

7. Dispositif suivant l'une quelconque des revendications 2 à 6, caractérisé en ce que les leviers (32) sont montés à pivot des deux côtés des traverses de scellement (22), au niveau de leurs parois d'extrémité (28).

8. Dispositif suivant au moins l'une des revendications 1 à 7, caractérisé en ce que les corps de pressage (30) dépassent des longerons de scellement (22) de telle façon que le rapport (k:l), défini comme le quotient de la largeur (k) de corps de pressage (30), dans la zone de pincement du matériau en bande, par la largeur (l) des traverses de scellement, est plus grand que 1, et, de préférence, plus grand que 3.

9. Dispositif suivant au moins l'une des revendications 1 à 7, caractérisé en ce que des galets (40) sont disposés de part et d'autre des corps de pressage (30), ces galets (40) roulant chacun sur, ou dans, un chemin de roulement du corps de guidage (44), dont le tracé est perpendiculaire au plan de symétrie (E).

10. Dispositif suivant la revendication 9, caractérisé en ce que l'axe de rotation des galets (40) est sensiblement voisin de celui des corps de pressage (30).

11. Dispositif suivant la revendication 10, caractérisé en ce que l'écartement (a) des axes est plus petit que le diamètre des galets (40).

12. Dispositif suivant l'une quelconque des revendications 9 à 11, caractérisé en ce que les courbes d'entrée (50) ont un tracé sensiblement hyperbolique, de telle façon qu'entre des parties d'extrémités à peu près rectilignes, il y a une zone présentant une courbure variable.

13. Dispositif suivant l'une quelconque des revendications 9 à 12, caractérisé en ce que le déplacement vers le bas du rouleau (40) par le corps de guidage (44) peut être déterminé au moyen de la course des ressorts de mise sous contrainte (38) et/ou au moyen de la forme d'exécution et de la façon dont sont disposés les leviers (32).

14. Dispositif suivant la revendication 13, caractérisé en ce que le palier de pivotement (34) de chaque levier (32) est disposé sur ou à proximité d'une incurvation (36) tournée vers le bas.

15. Dispositif suivant la revendication 14, caractérisé en ce que l'incurvation tournée vers le bas (36) est disposée dans la zone du milieu du levier (32) et est réalisée de telle façon que les extrémités du levier forment, l'une par rapport à l'autre, un angle obtus.

FIG.1

EP 0 308 861 B1

FIG.2

EP 0 308 861 B1

FIG. 3

FIG. 4

FIG.5a

FIG.5b

FIG.5c

FIG.5d

FIG.6